# EUROPEAN PATENT APPLICATION

(11) **EP 4 154 728 A1**
(43) Date of publication of application: **29.03.2023**
(21) Application number: 21808181.8
(22) Date of filing: 27.01.2021
(51) Int. Cl.: A23L 2/00, A23L 2/68, A23L 2/52, A23L 2/54

(54) **ACETIC ACID-CONTAINING BEVERAGE**

(30) Priority: 21.05.2020 JP 2020088736
(71) Applicant: Asahi Soft Drinks Co., Ltd., Tokyo 130-8602 (JP); Asahi Group Holdings, Ltd., Tokyo 130-8602 (JP)
(72) Inventor: KUBOTA, Hirofumi, Moriya-shi, Ibaraki 302-0106 (JP)
(74) Representative: Vossius & Partner Patentanwälte Rechtsanwälte mbB
(86) International application number: PCT/JP2021/002819
(87) International publication number: WO 2021/235006

(57) **Abstract**

[Problem] To provide a novel technique with which it is possible to reduce acetic acid irritation and difficulty to drink derived from acetic acid which may be sensed during drinking of an acetic acid-containing beverage.

[Solution] This beverage contains acetic acid in an amount of 10-800 ppm and gluconic acid in an amount of 50-2000 ppm, and has an acidity due to citric acid of 0.1-0.4 g/100 ml.

## Description

### Technical Field

The present invention relates to a beverage containing acetic acid.

### Background Art

Beverages containing acetic acid (e.g., Patent Literature 1) are known. Regarding beverages containing acetic acid, irritation due to acetic acid (irritation of pungent taste that goes through nose at the moment of drinking or irritation like burning feeling of getting hot in the back of throat after drinking) and difficulty to drink derived from acetic acid (feeling as if something is stuck in throat to cause difficulty to swallow) are sometimes sensed during drinking of them.

### Citation List

### Patent Literature

Patent Literature 1: JP2015-221032

### Summary of Invention

### Technical Problem

It is an object of the present invention to provide a novel technique capable of reducing irritation due to acetic acid and difficulty to drink derived from acetic acid that are sensed during drinking of a beverage containing acetic acid.

### Solution to Problem

As a result of earnest studies by the present inventors, they have found that by incorporating a prescribed amount of gluconic acid into a beverage containing acetic acid and setting a citric acid acidity of the beverage to a prescribed one, irritation due to acetic acid and difficulty to drink derived from acetic acid (these are also generically referred to as irritation and difficulty to drink simply hereinafter) can be reduced, and they have completed the present invention.

The gist of the present invention is as follows.
[1] A beverage comprising acetic acid in an amount of 10 to 800 ppm and gluconic acid in an amount of 50 to 2000 ppm, wherein the beverage has a citric acid acidity of 0.1 to 0.4 g/100 ml.
[2] The beverage according to [1], wherein the beverage further comprises polyphenol in an amount of 10 to 700 ppm.
[3] The beverage according to [1] or [2], wherein the beverage is a carbonated beverage having a carbon dioxide gas pressure of 1.0 to 4.5 Vol.
[4] The beverage according to any one of [1] to [3], wherein the beverage has a pH of 2.0 to 4.0.
[5] A method for reducing irritation due to acetic acid and difficulty to drink derived from acetic acid of a beverage containing acetic acid in an amount of 10 to 800 ppm, comprising:
   incorporating gluconic acid in an amount 50 to 2000 ppm into the beverage; and
   setting a citric acid acidity of the beverage to 0.1 to 0.4 g/100 ml.

### Advantageous Effect of Invention

According to the present invention, a novel technique capable of reducing irritation due to acetic acid and difficulty to drink derived from acetic acid that are sensed during drinking of a beverage containing acetic acid can be provided.

### Description of Embodiments

Hereinafter, one embodiment of the present invention will be described in detail.

The present embodiment relates to a beverage containing acetic acid, and the beverage contains acetic acid in an amount of 10 to 800 ppm. The beverage of the present embodiment contains gluconic acid in an amount of 50 to 2000 ppm, and has a citric acid acidity of 0.1 to 0.4 g/100 ml.

In the beverage of the present embodiment, the content of the acetic acid is 10 to 800 ppm, as described above. By applying the constitution of the present invention to a beverage satisfying an acetic acid content range of 10 ppm or more and 800 ppm or less, irritation and difficulty to drink can be suppressed more. From the viewpoint of deliciousness of the beverage in addition to the irritation and the difficulty to drink, the content of acetic acid is preferably 10 to 600 ppm, and more preferably 10 to 400 ppm.

The source of the acetic acid contained in the beverage of the present embodiment is not particularly limited. For example, a component mainly containing acetic acid, such as vinegar, is added to the beverage and thereby the acetic acid may be contained in the beverage. Also, acetic acid derived from a component described later that imparts taste and/or aroma to a beverage, or the like may be contained in the beverage.

The beverage of the present embodiment contains gluconic acid. The gluconic acid has a structure formed by the oxidation of primary carbon of glucose.

The source of the gluconic acid is not particularly limited similarly to the acetic acid. Gluconic acid of a naturally-occurring or synthetic compound may be added to the beverage, or gluconic acid derived from a component described later that imparts taste and/or aroma to a beverage, or the like may be contained in the beverage.

In the beverage of the present embodiment, gluconic acid is contained in an amount of 50 to 2000 ppm. By satisfying a range of 50 ppm or more and 2000 ppm or less, irritation and difficulty to drink can be suppressed, and from the same viewpoint, the content of the gluconic acid is preferably 100 to 1800 ppm, more preferably 300 to 1600 ppm, and still more preferably 500 to 1200 ppm.

The acetic acid content and the gluconic acid content in the beverage can be measured by, for example, high-performance liquid chromatography (HPLC).

The citric acid acidity of the beverage of the present embodiment is preferably 0.1 to 0.4 g/100 ml, and more preferably 0.15 to 0.35 g/100 ml.

In the present specification, the citric acid acidity refers to the number of grams when the amount of an organic acid contained in 100 ml of the beverage is converted to that of citric acid [anhydrous citric acid g/100 ml]. The citric acid acidity of the beverage can be measured by a method specified in the acidity determination of JAS, specifically, a neutralization titration method (quantitative method) using a 0.1 mol/L sodium hydroxide standard liquid as an alkaline solution. When the beverage is a carbonated beverage described later, the beverage is subjected to degassing to remove carbon dioxide gas by a conventional method before it is subjected to measurement of citric acid acidity, and then the beverage is subjected to the measurement.

Moreover, the beverage of the present embodiment preferably contains polyphenol in an amount of 10 to 700 ppm (more preferably 10 to 300 ppm), in addition to the gluconic acid, from the viewpoints of further reduction of irritation and difficulty to drink and improvement in deliciousness of the beverage.

Polyphenol is a compound having a plurality of phenolic hydroxyl groups in a molecule. The polyphenol content can be measured using the Folin-Ciocalteu method (see "Analytical Manual for the Standard Tables of Food Composition in Japan 2015 (Seventh Revised Version)", "Dai 7-sho Sonotano bikoran shusai seibun (in Japanese) (Chapter 7 Other Components Listed in Remarks Column)". This method is a method in which utilizing coloring of a Folin reagent (Folin-Ciocalteu, phenol reagent) to blue by being reduced by the phenolic hydroxyl groups, an absorbance at 765 nm is measured to carry out quantitative determination. When the beverage of the present embodiment is a beverage mainly composed of catechin and tannin (the amounts of catechin and tannin are 50% by mass or more in the whole polyphenols in the beverage) (e.g., green tea, black tea, oolong tea), the polyphenol content can be defined as an amount of tannin. The amount of tannin can be measured using the ferrous tartrate method (see "Ryokucha · Kocha · Oolong-cha no Kagaku to Kino (in Japanese) (Chemistry and Functions of Green tea, Black tea and Oolong tea)" written by Toshiro Nakabayashi, et al., published by Kogaku Publishing Co., Ltd., p. 137) that is specified as an official method for teas when the amount of polyphenol of teas is evaluated. In this measurement method, by measuring an absorbance (540 nm) of a purple component produced by the reaction of polyphenol in the liquid with a ferrous tartrate reagent, quantitative determination can be carried out using a calibration curve prepared using ethyl gallate as a standard substance. The resulting value thus determined is increased by half, and the value obtained can be defined as an amount of tannin.

The source of the polyphenol that can be contained in the beverage of the present embodiment is not particularly limited either, and polyphenol synthesized or extracted may also be added to the beverage, or polyphenol derived from a component that imparts taste and/or aroma contained in a beverage, or the like may be contained in the beverage.

In addition to the acetic acid, the gluconic acid, and the polyphenol that can be contained in a preferred embodiment, the beverage of the present embodiment may further contain other components without any limitation as long as the object of the present invention can be achieved.

For example, the beverage of the present embodiment may contain a component that imparts taste and/or aroma to a beverage. Some examples of such components include fruit juices, extracts from tea leaves of green tea, black tea, etc., or coffer beans, and fragrances.

Fruit juice refers to a liquid component obtained by crushing a fruit, squeezing or straining the crushed fruit, and if necessary, removing peels, seeds, etc. Examples of fruits from which fruit juices are derived include citrus fruits, fruits of Rosaceae, grape, pineapple, guava fruit, banana, mango, acerola, lychee, papaya, passion fruit, blueberry, kiwi fruit, and melon. Examples of the citrus fruits include orange, Satsuma mandarin, grapefruit, lemon, lime, Yuzu, Iyokan, bitter summer orange, Hassaku orange, ponkan orange, flat lemon, and Kabosu. Examples of the fruits of Rosaceae include apricot, strawberry, ume, cherry, plum, pear, Japanese pear, loquat, peach, apple, prune, and raspberry. For example, fruit juice of one or two or more fruits selected from these fruits may be contained in the beverage of the present embodiment.

As the fruit juices or the extracts, those obtained by squeezing treatment or extraction treatment may be added to the beverage as they are, or those having been subjected to treatments, such as concentration, reduction, fermentation and freeze drying, may be contained in the beverage.

Moreover, in the beverage of the present embodiment, other components that impart taste and/or aroma, etc., for example, beverage components used in commercial beverages may be contained. Examples of such components include an antifoaming agent, an acidulant, sodium salts such as sodium hydrogencarbonate, sodium citrate, sodium phosphate and sodium chloride, magnesium salts such as magnesium sulfate, potassium salts such as potassium phosphate, calcium salts such as calcium chloride, a pH adjustor, a preservative, an antioxidant, a sweetener, and amino acid.

The Brix value of the beverage of the present embodiment is not particularly limited and can be appropriately set by a person skilled in the art, and for example, it can be set to 1 to 15.

In the present specification, the Brix value refers to a sugar refractometer index at a sample temperature (liquid temperature) of 20°C. Measurement of Brix can be carried out using the known method and apparatus. Adjustment of the Brix value is carried out, for example, by adjusting the sweetener content. Adjustment of the Brix value is not particularly limited, but can be carried out in, for example, any stage for preparing the beverage. In Examples in the present specification, a value measured at 20°C using a digital refractometer RX-5000α manufactured by ATAGO CO., LTD. was measured.

The pH of the beverage of the present embodiment is not particularly limited either and can be appropriately set by a person skilled in the art, but it is preferably 2.0 to 4.0 because irritation and difficulty to drink can be more reduced.

The beverage of the present embodiment may be a carbonated beverage. In the present specification, the carbonated beverage refers to a beverage in which carbon dioxide (carbon dioxide gas) is dissolved.

When the beverage of the present embodiment is a container-packed carbonated beverage, its carbon dioxide gas pressure is preferably 1.0 to 4.5 Vol, and more preferably 2.0 to 3.0 Vol, from the viewpoint of further reduction of irritation and difficulty to drink.

In the present specification, the carbon dioxide gas pressure refers to a ratio of a volume of the carbon dioxide gas dissolved in the container-packed carbonated beverage at 1 atom and 0°C to a volume of the beverage.

The carbon dioxide gas pressure can be obtained as a value given when a constant pressure is reached after operations of setting the sample to 20°C, then installing an internal gas pressure meter, opening a stopper cock once to perform a degassing (snifting) operation, immediately closing the stopper cock, and vigorously shaking the sample.

The beverage of the present embodiment can be produced by, for example, adding the components to be contained in the beverage to raw material water in such a manner that the acetic acid content becomes 10 to 800 ppm, the gluconic acid content becomes 50 to 2000 ppm, and the citric acid acidity becomes 0.1 to 0.4 g/100 ml, and mixing them.

The method, the order, etc. for adding the components are not particularly limited, and can be appropriately set by a person skilled in the art. The above-mentioned raw material water may be water itself, or may be a solution of a component to be contained, or the like.

When the beverage is a carbonated beverage, treatment to dissolve carbon dioxide in the beverage is not particularly limited either, and for example, a method comprising mixing water in which carbon dioxide is dissolved with a solution obtained by dissolving other components in raw material water to prepare a carbonated beverage (post-mix method), or a method comprising directly blowing carbon dioxide into the above-mentioned solution to dissolve the carbon dioxide therein (pre-mix method) can be mentioned.

The beverage of the present embodiment can be made to be a container-packed beverage in which the beverage is packed in a container. A method for packing the beverage in a container, etc. are not particularly limited, and for example, packing can be carried out in accordance with a conventional method.

As the container, a known one used for beverages, or the like can be appropriately selected and used, and its material, shape, etc. are not particularly limited. Specific examples of the containers include a transparent or translucent bottle, a transparent or translucent plastic container such as a PET bottle, and a metal can such as a steel can or an aluminum can.

According to the present embodiment, by incorporating gluconic acid in an amount of 50 to 2000 ppm into a beverage containing acetic acid in an amount of 10 to 800 ppm and setting a citric acid acidity of the beverage to 0.1 to 0.4 g/100 ml, irritation and difficulty to drink that are sensed during drinking can be reduced.

As a result, the preference for a beverage containing acetic acid can be increased, and a beverage with higher commercial value can be prepared.

As one embodiment of the present invention, a method for reducing irritation due to acetic acid and difficulty to drink derived from acetic acid of a beverage containing acetic acid in an amount of 10 to 800 ppm, comprising incorporating gluconic acid in an amount 50 to 2000 ppm into the beverage, and setting a citric acid acidity of the beverage to 0.1 to 0.4 g/100 ml can also be provided.

### Examples

The present invention will be more specifically described with reference to the following Examples, but the present invention is not limited to them.

### [Test Example 1 <Confirmation of effectiveness of gluconic acid and polyphenol to reduce irritation and difficulty to drink>]

With ion-exchanged water, raw materials were mixed in amounts shown in the following Table 1, and carbon dioxide gas was injected thereinto, thereby preparing beverages of Examples and Comparative Examples.

As can be understood from Table 1, the content of acetic acid was set to 100 ppm. In the beverages of Examples containing gluconic acid, the content of gluconic acid was set to 800 ppm.

For preparing beverages of Examples containing tea polyphenol, a green tea extract-containing composition (Sunphenon 90LB-OP (manufactured by Taiyo Kagaku Co., Ltd.)) was added in an amount of 125 ppm so that the content of the tea polyphenol became about 100 ppm. Likewise, for preparing beverages of Examples containing apple polyphenol, an apple extract-containing composition (Apple Polyphenol APP-100 (manufactured by Asahi Group Foods, Ltd.)) was added in an amount of 100 ppm so that the content of the apple polyphenol became about 85 ppm.

The Brix values of the beverages of Examples and Comparative Examples were each 6.7, the citric acid acidities thereof were each 0.23 g/100 ml, and the carbon dioxide gas pressures thereof were each 2.7 Vol.

**[Table 1]**

| (g/L) | | | | | | | | |
|---|---|---|---|---|---|---|---|---|
| Raw material name | Comparative Example 1 | Example 1-1 | Example 1-2 | Example 1-3 | Comparative Example 2 | Example 2-1 | Example 2-2 | Example 2-3 |
| High-fructose corn syrup | 86.67 | 86.67 | 86.67 | 86.67 | 86.67 | 86.67 | 86.67 | 86.67 |
| Citric acid | 2.2 | 1.94 | 1.94 | 1.94 | | | | |
| Malic acid | | | | | 2.30 | 2.04 | 2.04 | 2.04 |
| Gluconic acid (50%) | | 1.6 | 1.6 | 1.6 | | 1.6 | 1.6 | 1.6 |
| Acetic acid | 0.1 | 0.1 | 0.1 | 0.1 | 0.1 | 0.1 | 0.1 | 0.1 |
| Tea polyphenol (Sunphenon 90LB-OP) | | | 0.100 (0.125) | | | | 0.100 (0.125) | |
| Apple polyphenol (Apple Polyphenol (APP-100)) | | | | 0.085 (0.100) | | | | 0.085 (0.100) |

Regarding the resulting beverages of Examples and Comparative Examples, organoleptic evaluation was carried out by panelists skilled in the beverage development (n=5). In the evaluation, the beverage of Comparative Example 1 was used as a control, and the beverages of Examples 1-1 to 1-3 were subjected 7-grade evaluation in which the best (or observed) one was evaluated as 7, and the worst (or not observed) one was evaluated as 1. Also, regarding the beverages of Examples 2-1 to 2-3, the same evaluation was carried out using Comparative Example 2 as a control. The evaluation point was calculated by averaging the numerical values obtained by the panelists. The results are set forth in Table 2.

### Deliciousness:

7 Very good
6 Good
5 Slightly good
4 No change
3 Slightly poor
2 Poor
1 Very poor

### Level of difficulty to drink due to acetic acid and irritation derived from acetic acid:

7 Markedly observed
6 Considerably observed
5 Substantially observed
4 Relatively observed
3 A little observed
2 Slightly observed
1 Never observed

**[Table 2]**

| | Comparative Example 1 | Example 1-1 | Example 1-2 | Example 1-3 | Comparative Example 2 | Example 2-1 | Example 2-2 | Example 2-3 |
|---|---|---|---|---|---|---|---|---|
| Deliciousness | 4 | 4.8 | 6.0 | 6.2 | 4 | 5 | 6.2 | 6.4 |
| Difficulty to drink due to acetic acid | 7 | 5.6 | 3.8 | 3.6 | 7 | 5.4 | 3.8 | 3.6 |
| Irritation derived from acetic acid | 7 | 5.6 | 4.0 | 3.4 | 7 | 5.2 | 3.8 | 3.2 |

As can be understood from Table 2, in the beverages of Examples, difficulty to drink due to acetic acid and irritation derived from acetic acid were both reduced.

### [Test Example 2 <Confirmation of influence of amount of acetic acid on effect of reducing irritation and difficulty to drink>

Regarding the resulting beverages of Examples and Comparative Examples, organoleptic evaluation was carried out by panelists skilled in the beverage development (n=4). Beverages of Examples 3-1 to 5 were prepared in the same manner as in Example 2-2, except that the acetic acid content was set as shown in Table 3. Moreover, a beverage of Comparative Example 3 was prepared in the same manner as in Example 2-2, except that gluconic acid and tea polyphenol were not added, and the acetic acid content was set as shown in Table 3, and the resulting beverage was used as a control.

The Brix values of the beverages of Examples and Comparative Examples were each 6.7, the citric acid acidities thereof were each 0.23 g/100 ml, and the carbon dioxide gas pressures thereof were each 2.7 Vol.

Regarding the resulting beverages of Examples and Comparative Examples, the same organoleptic evaluation as in Test Example 1 was carried out.

The results are set forth in Table 3.

**[Table 3]**

| | Comparative Example 3 | Example 3-1 | Example 3-2 | Example 3-3 | Example 3-4 | Example 3-5 |
|---|---|---|---|---|---|---|
| Acetic acid | 0.1 g/L (100ppm) | 0.1 g/L (100ppm) | 0.2 g/L (200ppm) | 0.4 g/L (400ppm) | 0.6 g/L (600ppm) | 0.8 g/L (800ppm) |
| Deliciousness | 4 | 6.2 | 6.0 | 5.0 | 4.5 | 3.5 |
| Difficulty to drink due to acetic acid | 7 | 3.8 | 4.0 | 4.3 | 5.8 | 6.5 |
| Irritation derived from acetic acid | 7 | '3.8 | 3.8 | 4.5 | 5.8 | 6.5 |

As can be understood from Table 3, in the beverages of Examples 3-1 to 3-5, difficulty to drink due to acetic acid and irritation derived from acetic acid were both reduced.

## Claims

1. A beverage comprising acetic acid in an amount of 10 to 800 ppm and gluconic acid in an amount of 50 to 2000 ppm, wherein the beverage has a citric acid acidity of 0.1 to 0.4 g/100 ml.

2. The beverage according to claim 1, wherein the beverage further comprises polyphenol in an amount of 10 to 700 ppm.

3. The beverage according to claim 1 or 2, wherein the beverage is a carbonated beverage having a carbon dioxide gas pressure of 1.0 to 4.5 Vol.

4. The beverage according to any one of claims 1 to 3, wherein the beverage has a pH of 2.0 to 4.0.

5. A method for reducing irritation due to acetic acid and difficulty to drink derived from acetic acid of a beverage containing acetic acid in an amount of 10 to 800 ppm, comprising:
incorporating gluconic acid in an amount 50 to 2000 ppm into the beverage; and
setting a citric acid acidity of the beverage to 0.1 to 0.4 g/100 ml.
